# FASCICULE DE BREVET EUROPEEN

(11) **EP 4 055 100 B1**
(45) Date de publication et mention de la délivrance du brevet: **31.12.2025**
(21) Numéro de dépôt: 20817456.5
(22) Date de dépôt: 04.11.2020
(51) Int. Cl.: C08L 9/00, B60C 1/00, C08L 15/00

(54) **COMPOSITION DE CAOUTCHOUC COMPRENANT UNE CHARGE ET UN SYSTÈME DE RÉTICULATION ADAPTÉS**
GUMMIZUSAMMENSETZUNG MIT EINEM GEEIGNETEN FÜLLSTOFF UND GEEIGNETEM VERNETZUNGSSYSTEM
RUBBER COMPOSITION COMPRISING A SUITABLE FILLER AND A SUITABLE CROSSLINKING SYSTEM

(30) Priorité: 06.11.2019 FR 1912466
(43) Date de publication de la demande: 14.09.2022
(73) Titulaire: COMPAGNIE GENERALE DES ETABLISSEMENTS MICHELIN, 63000 Clermont-Ferrand (FR)
(72) Inventeur: RIOU, Aline, 63040 CLERMONT-FERRAND Cedex 9 (FR)
(74) Mandataire: M.F.P. Michelin
(86) Numéro de dépôt international: PCT/FR2020/051990
(87) Numéro de publication internationale: WO 2021/089941

(56) Documents cités:
- EP-A1- 2 377 693
- WO-A1-2014/105811
- FR-A1- 3 005 471

## Description

### Domaine technique de l'invention

L'invention concerne une composition de caoutchouc et un pneumatique adapté pour le roulage à plat.

### Art antérieur

Depuis quelques années, les manufacturiers de pneumatiques cherchent à supprimer la nécessité de la présence d'une roue de secours à bord du véhicule tout en garantissant la possibilité de poursuivre sa route malgré une perte importante ou totale de pression d'un ou plusieurs pneumatiques afin, par exemple de se rendre à un point de dépannage sans devoir s'arrêter, dans des circonstances souvent hasardeuses, pour installer la roue de secours.

Lorsque la pression de gonflage est significativement abaissée par rapport à la pression de service, voire même nulle (on parle alors de mode « roulage à plat »), le pneumatique doit permettre de rouler une distance donnée à une vitesse donnée, par exemple 80 km à 80 km/h. Cette performance, dite performance « RME » (Roulage Mode Etendu), est requise par la législation ou par les constructeurs automobiles pour permettre au manufacturier de présenter le pneumatique comme adapté pour le roulage à plat.

Lorsque la pression de gonflage est proche de la pression de service (on parle alors de mode « roulage normal »), il est souhaitable que le pneumatique présente des performances, dites performances « RMG » (Roulage Mode Gonflé), aussi élevées que possible. Ces performances RMG comprennent, entre autres, la masse, la résistance au roulement ou encore le confort.

Une solution envisagée est l'utilisation de pneumatiques adaptés pour un roulage à plat et pourvus de flancs autoporteurs, parfois désignés par les appellations commerciales en langue anglaise « ZP » pour « zero pressure », « SST » pour « self supporting tire » ou « run flat » pour roulage à plat.

On connait de l'état de la technique un pneumatique adapté pour un roulage à plat comportant un sommet comprenant une armature de sommet, formée de deux nappes de sommet d'éléments de renfort et surmontée d'une bande de roulement. Deux flancs prolongent le sommet radialement vers l'intérieur. Le pneumatique comporte en outre deux bourrelets comprenant chacun une tringle ainsi qu'une armature de carcasse ancrée à chacun des bourrelets et s'étendant depuis les bourrelets à travers les flancs vers le sommet. Les flancs sont renforcés au moyen de renforts de flancs en caoutchouc permettant de supporter une charge à pression réduite, voire sans pression. Chaque renfort de flanc en caoutchouc est fabriqué à partir d'une composition de caoutchouc réticulable et doit présenter certaines propriétés à cuit, notamment une rigidité suffisante, pour supporter au moins partiellement la charge à pression réduite, voire sans pression.

On connait du document WO 2014/105811 un pneumatique adapté pour le roulage à plat comprenant des inserts de flancs dont la composition est à base de polybutadiène fonctionnel et d'un coupage d'un noir de carbone présentant une surface spécifique BET comprise entre 15 et 25 m²/g et un COAN compris entre 65 et 85 ml/100g et d'un noir de carbone de surface spécifique BET comprise entre 0 et 11 m²/g, ces flancs présentant une forte rigidité et une faible perte hystérétique. La composition est réticulée avec un système de vulcanisation dit « conventionnel » dans lequel le ratio massique soufre sur accélérateur de vulcanisation est supérieur à 1.

On connait du document FR 3 005 471 une composition comprenant comme élastomère majoritaire un polybutadiène non fonctionnel présentant une plasticité Mooney comprise dans un domaine de valeurs allant de 40 à 70 unités Mooney et une charge renforçante spécifique, à savoir un noir de carbone présentant une surface spécifique BET comprise entre 15 et 25 m²/g et un indice d'absorption d'huile par des échantillons comprimés (COAN) compris entre 65 et 85 ml/100g. Cette composition est utilisée dans les inserts de flancs d'un pneumatique adapté pour un roulage à plat et améliore leur résistance à l'échauffement.

Le document EP 2 377 693 décrit un pneumatique adapté pour le roulage à plat comprenant une composition à base d'un coupage de caoutchouc naturel et de polybutadiène et au plus 50 pce de charge, réticulée par un système de vulcanisation conventionnel. Le pneumatique présente une résistance au roulement améliorée et un bon confort de conduite.

La demanderesse a découvert une composition qui permet d'obtenir des inserts de flancs pour un pneumatique adapté pour un roulage à plat ayant une rigidité améliorée tout en abaissant encore la résistance au roulement du pneumatique comprenant ce renfort, grâce à la combinaison de teneurs spécifiques en élastomère et charge, ainsi qu'un système de vulcanisation adapté. En particulier, la demanderesse a découvert des compositions présentant d'excellentes rigidités aux faibles déformations, tout en préservant, voire améliorant les autres caractéristiques.

### Description détaillée de l'invention

L'invention a pour objet au moins l'une des réalisations suivantes :
1. Composition de caoutchouc à base :
   - d'une matrice élastomérique comprenant de 40 à 80 pce d'au moins un élastomère butadiénique ;
   - d'un système de vulcanisation comprenant du soufre et un accélérateur de vulcanisation, dans lequel le ratio massique soufre sur accélérateur de vulcanisation est strictement inférieur à 1 ;
   - au moins 55 pce de charge organique comprenant majoritairement un noir de carbone, dit noir G, présentant une surface spécifique BET allant de 15 à 50 m²/g et un indice d'absorption d'huile d'échantillons comprimés (COAN) allant de 40 à 100 ml/100 g.
2. Composition selon la réalisation précédente dans laquelle l'élastomère butadiénique est choisi dans le groupe constitué par les polybutadiènes, les copolymères de butadiène et leurs mélanges.
3. Composition selon la réalisation précédente dans laquelle les copolymères de butadiène sont choisis dans le groupe constitué par les copolymères de butadiène-styrène et leurs mélanges.
4. Composition selon l'une des réalisations 1 ou 2 dans laquelle l'élastomère butadiénique est choisi dans le groupe constitué par les polybutadiènes et leurs mélanges.
5. Composition selon l'une quelconque des réalisations précédentes dans laquelle l'élastomère butadiènique présente une plasticité Mooney comprise entre 40 et 75 UM et une température de transition vitreuse comprise entre -108 et -80°C.
6. Composition selon l'une quelconque des réalisations précédentes dans laquelle la matrice élastomérique comprend également un élastomère isoprénique, de préférence choisi dans le groupe constitué par les polyisoprènes de synthèse, le caoutchouc naturel, les copolymères d'isoprène et les mélanges de ces élastomères.
7. Composition selon l'une quelconque des réalisations précédentes dans laquelle l'élastomère butadiénique est fonctionnalisé.
8. Composition selon la réalisation précédente dans laquelle l'élastomère butadiénique fonctionnalisé comprend un groupe fonctionnel comprenant une fonction choisie dans le groupe constitué par les fonctions alcoxysilane, silanol, amine, acide carboxylique, polyéther et leurs combinaisons, préférentiellement constitué par les fonctions alcoxysilane, silanol, amine et leurs combinaisons.
9. Composition selon la réalisation précédente dans laquelle l'élastomère butadiénique fonctionnalisé comprend un groupe fonctionnel comprenant au moins une fonction amine.
10. Composition selon l'une quelconque des réalisations 7 à 9 dans laquelle l'élastomère butadiénique fonctionnalisé est couplé et/ou étoilé.
11. Composition selon l'une quelconque des réalisations précédentes comprenant de 20 à 60 pce d'élastomère isoprénique.
12. Composition selon l'une quelconque des réalisations précédentes comprenant de 40 à 70 pce d'élastomère butadiénique et de 30 à 60 pce d'élastomère isoprénique.
13. Composition selon l'une quelconque des réalisations précédentes comprenant de 55 à 80 pce, de manière préférée de 55 à 75 pce de noir de carbone G.
14. Composition selon l'une quelconque des réalisations précédentes ne comprenant pas de noir de carbone dont la surface BET est inférieure à 15 m²/g ou en comprenant moins de 10 pce, de préférence moins de 5 pce, de manière préférée moins de 2 pce, préférentiellement moins de 1 pce.
15. Composition selon l'une quelconque des réalisations précédentes comprenant moins de 10 pce, de préférence moins de 5 pce, de manière préférée moins de 2 pce et préférentiellement moins de 1 pce de noir de carbone autre que du noir de carbone G.
16. Composition selon l'une quelconque des réalisations précédentes comprenant en outre une charge inorganique choisie dans le groupe constitué par la silice, l'alumine, la craie, l'argile, la bentonite, le talc, le kaolin, les microbilles de verre, les paillettes de verre, et leurs mélanges, de préférence constitué par la silice, la craie, l'argile, la bentonite, le talc, le kaolin, et leurs mélanges.
17. Composition selon la réalisation précédente comprenant de 3 à 30 pce, de manière préférée de 3 à 20 pce et de manière très préférée de 3 à 15 pce de charge inorganique.
18. Composition selon l'une quelconque des réalisations précédentes dans laquelle le total de charge organique et inorganique est au plus de 110 pce, préférentiellement au plus de 80 pce et de manière préférée au plus de 75 pce.
19. Composition selon l'une quelconque des réalisations précédentes dans laquelle le ratio massique soufre sur accélérateur de vulcanisation dans le système de vulcanisation est inférieur ou égal à 0,95, de préférence inférieur ou égal à 0,90, plus préférentiellement inférieur ou égal à 0,85 et de manière préférée inférieur ou égal à 0,80.
20. Article de caoutchouc fini ou semi-fini comportant une composition selon l'une quelconque des réalisations 1 à 19.
21. Pneumatique comprenant une composition selon l'une quelconque des réalisations 1 à 19.
22. Pneumatique selon la réalisation précédente dans lequel la composition de caoutchouc selon l'une quelconque des réalisations 1 à 19 est présente dans au moins une couche interne.
23. Pneumatique selon la réalisation précédente dans lequel la composition de caoutchouc selon l'une quelconque des réalisations 1 à 19 est présente dans une couche interne choisie dans le groupe constitué par les pieds sommets, les couches de découplage, les gommes de bordure, les gommes de bourrage, la sous-couche de bande de roulement, le renfort de flanc et les combinaisons de ces couches internes.
24. Pneumatique adapté pour un roulage à plat caractérisé en ce qu'il comprend un renfort de flanc comprenant une composition selon l'une quelconque des réalisations 1 à 19.
25. Pneumatique adapté pour un roulage à plat selon la réalisation précédente dans lequel chaque bourrelet comprend une bande latérale comprenant une composition selon l'une quelconque des réalisations 1 à 19.
26. Pneumatique adapté pour un roulage à plat selon l'une quelconque des réalisations 24 ou 25 dans lequel chaque bourrelet comprend un bourrage tringle comprenant une composition selon l'une quelconque des réalisations 1 à 19.

### Définitions

Par l'expression "partie en poids pour cent parties en poids d'élastomère" (ou pce), il faut entendre au sens de la présente invention, la partie, en masse pour cent parties en masse d'élastomère ou de caoutchouc, les deux termes étant synonymes.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. De préférence par majoritaire, on entend présent à plus de 50%, de préférence plus de 60%, 70%, 80%, 90%, et plus préférentiellement le composé « majoritaire » représente 100%.

Par « matrice élastomérique » au sens de la présente invention, on entend l'ensemble des élastomères (ou caoutchoucs) de la composition de caoutchouc. Ainsi, la matrice élastomérique peut notamment être constituée d'un seul élastomère mais aussi d'un coupage de deux ou de plusieurs élastomères.

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

La mesure de plasticité Mooney se fait selon le principe suivant et conformément à la norme ASTM D-1646. Le polybutadiène généralement cru est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

La température de transition vitreuse Tg est mesurée de manière connue par calorimétrie différentielle, ou DSC (Differential Scanning Calorimetry), par exemple et sauf indications différentes spécifiées, selon la norme ISO 11357-2 de 2014.

### Elastomères

La composition de caoutchouc selon l'invention est à base de 40 à 80 pce d'au moins un élastomère butadiénique. Ainsi, la composition selon l'invention peut contenir un ou plusieurs élastomères butadiéniques ou un mélange d'un ou plusieurs élastomères butadiéniques avec un ou plusieurs autres élastomères, par exemple diéniques autres que butadièniques.

L'élastomère butadiénique de la composition selon l'invention est préférentiellement choisi dans le groupe constitué par les polybutadiènes (en abrégé "BR"), les copolymères de butadiène et leurs mélanges. De tels copolymères de butadiène sont plus préférentiellement choisis dans le groupe constitué par les copolymères de butadiène-styrène (SBR) et leurs mélanges. De manière préférée, l'élastomère butadiénique est choisi dans le groupe constitué par les polybutadiènes et leurs mélanges. De préférence, l'élastomère butadiènique est non syndiotactique.

De manière préférée, l'élastomère butadiénique est fonctionnalisé, c'est-à-dire qu'il comprend au moins un groupe fonctionnel. Par groupe fonctionnel, on entend un groupe comprenant au moins un hétéroatome choisi parmi Si, N, S, O, P.

L'élastomère butadiénique fonctionnalisé comprend de manière préférée un groupe fonctionnel comprenant une fonction choisie dans le groupe constitué par les fonctions alcoxysilane, silanol, amine, acide carboxylique, polyéther et leurs combinaisons, de manière préférée comprenant une fonction choisie dans le groupe constitué par les fonctions alcoxysilane, silanol, amine et leurs combinaisons, et de manière très préférée un groupe comprenant au moins une fonction amine.

De manière préférée, l'élastomère butadiénique fonctionnalisé est couplé et/ou étoilé, par exemple au moyen d'un atome de silicium ou d'étain qui lie entre elles les chaînes élastomères.

De manière préférée, l'élastomère butadiénique fonctionnalisé est choisi dans le groupe constitué par les polybutadiènes fonctionnalisés et leurs mélanges. Dans un cas préféré où l'élastomère butadiénique fonctionnalisé est choisi dans le groupe des polybutadiènes fonctionnalisés, préférentiellement couplés et/ou étoilés, il présente préférentiellement un taux de motifs cis-1,4 d'au plus 50% et de préférence d'au plus 40% en poids du poids total du polybutadiène.

De tels élastomères butadiéniques fonctionnalisés utiles aux besoins de l'invention sont disponibles commercialement. On peut citer par exemple le NIPOL BR 1250H^{™}, commercialisé par la société Zeon Corporation.

La matrice élastomérique de la composition selon l'invention comprend également de manière préférée un élastomère isoprénique.

Par "élastomère isoprénique", on entend un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène, en particulier les copolymères d'isoprène-styrène (SIR), d'isoprène-butadiène (BIR) ou d'isoprène-butadiène-styrène (SBIR), et les mélanges de ces élastomères.

De manière préférée, l'élastomère isoprénique est choisi dans le groupe constitué par les polyisoprènes de synthèse, le caoutchouc naturel, les copolymères d'isoprène et leurs mélanges, de préférence dans le groupe constitué par le caoutchouc naturel, les polyisoprènes comprenant un taux massique de liaisons cis 1,4 d'au moins 90%, plus préférentiellement d'au moins 98% par rapport à la masse d'élastomère isoprénique et leurs mélanges. De manière préférée, l'élastomère isoprénique est le caoutchouc naturel.

De préférence, la composition selon l'invention comprend de 40 à 70 pce, préférentiellement de 45 à 70 pce, de manière préférée de 50 à 70 pce d'élastomère butadiénique, préférentiellement fonctionnalisé. De préférence, la composition selon l'invention comprend de 20 à 60 pce, préférentiellement de 30 à 60 pce, de manière préférée de 30 à 55 pce, et très préférentiellement de 30 à 50 pce d'élastomère isoprénique.

De manière préférée, la composition selon l'invention comprend de 50 à 70 pce d'un élastomère butadiènique choisi parmi les polybutadiènes fonctionnalisés ou non fonctionnalisés, et de 30 à 50 pce d'un élastomère isoprénique choisi parmi le caoutchouc naturel et les polyisoprènes de synthèse, et très préférentiellement ne comprend pas d'autre élastomère.

L'élastomère isoprénique confère, entre autres, du collant à cru (« tack » en anglais) à la composition. Ainsi, on limite voire on supprime la nécessité d'utiliser une résine dite « tackifiante » dans la composition de caoutchouc qui pourrait augmenter l'hystérèse de la composition et donc impacter négativement la résistance au roulement du pneumatique selon l'invention.

### Charge

La composition de caoutchouc selon l'invention est à base d'au moins 55 pce de charge organique comprenant majoritairement un noir de carbone, dit noir G, présentant une surface spécifique BET allant de 15 à 50 m²/g et un indice d'absorption d'huile d'échantillons comprimés (COAN) allant de 40 à 100 ml/100 g.

La charge organique de la composition de caoutchouc selon l'invention comprend du noir de carbone, sous forme d'un seul noir de carbone ou d'un coupage d'au moins deux noirs de carbone.

Comme noirs de carbone conviennent les noirs de carbone conventionnellement utilisés dans les pneumatiques (noirs dits de grade pneumatique). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à un élastomère isoprénique sous la forme d'un masterbatch (voir par exemple demandes WO 97/36724 ou WO 99/16600).

On caractérise les noirs de carbone par différentes propriétés, notamment par la surface spécifique BET, et par l'indice d'absorption d'huile d'échantillons comprimés (COAN pour « Compressed Oil Absorption Number » en anglais). Le COAN des noirs de carbone, est mesuré selon la norme ASTM D3493-16.

La surface spécifique BET des noirs de carbone est mesurée selon la norme D6556-10 (méthode multipoints (au minimum 5 points) - gaz : azote - domaine de pression relative P/P0 : 0.1 à 0.3).

Des exemples de noirs de carbone G utiles aux besoins de l'invention sont le N683, le N650, le N660 le N550, le « S204 » commercialisé par la société Orion Engineered Carbon, le S820 commercialisé par la société OMSK et le BC1001 commercialisé par la société Birla.

La charge organique comprend majoritairement, c'est-à-dire au moins 50% en masse, de noir G. De manière préférée, la charge organique comporte 60%, 70%, 80%, 90% en masse de noir G. De manière très préférée, la charge organique est constituée de noir G.

Le taux de noir G dans la composition de caoutchouc selon l'invention est préférentiellement compris dans un domaine de valeurs allant de 55 à 80 pce, de préférence de 55 à 75 pce.

La composition de caoutchouc selon l'invention ne comprend de préférence pas de noir de carbone dont la surface BET est inférieure à 15 m²/g ou en comprend moins de 10 pce, de préférence moins de 5 pce, de manière préférée moins de 2 pce, préférentiellement moins de 1 pce.

La composition de caoutchouc selon l'invention peut également comprendre une charge inorganique.

L'état physique sous lequel se présente la charge inorganique est indifférent, que ce soit sous forme de poudre, de microperles, de granulés, de billes ou toute autre forme densifiée appropriée.

La charge inorganique est de manière préférée choisie dans le groupe constitué par les charges minérales du type siliceuse, en particulier de la silice (SiO₂), du type alumineuse, en particulier de l'alumine (Al₂O₃), la craie, l'argile, la bentonite, le talc, le kaolin, les microbilles de verre, les paillettes de verre (« glass flakes » en anglais) et leur mélange, de manière préférée parmi la silice, la craie, l'argile, la bentonite, le talc, le kaolin et leur mélange, préférentiellement parmi la silice, la craie, le kaolin et leur mélange. De manière très préférée, la charge inorganique comprend de la silice.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titre de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Dans le présent exposé, la surface spécifique BET de la silice est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

La surface spécifique CTAB de la silice est déterminée selon la norme française NF T 45-007 de novembre 1987 (méthode B).

Dans le cas préféré où la charge inorganique comprend de la silice, celle-ci a de préférence une surface BET comprise entre 45 et 400 m²/g, plus préférentiellement comprise entre 60 et 300 m²/g.

La composition selon l'invention ne comprend préférentiellement pas d'agent de couplage charge inorganique-élastomère ou en comprend moins de 5 % en masse par rapport à la masse de charge inorganique, de préférence moins de 2 % en masse, de manière préférée moins de 1% en masse par rapport à la masse de charge inorganique.

Par « agent de couplage » (ou « agent de liaison »), on entend de manière connue un agent apte à coupler la charge inorganique à l'élastomère.

La craie se présente préférentiellement sous la forme de microparticules dont la taille moyenne (en masse) est supérieure à 1 µm. La taille médiane des microparticules de craie, mesure obtenue sur sédigraphe, est préférentiellement comprise entre 0,5 et 200 µm, plus particulièrement entre 0,5 et 30 µm et encore plus préférentiellement entre 1 et 20 µm.

Les craies connues de l'homme du métier sont les carbonates de calcium naturels (craie) ou synthétiques avec ou sans enrobage (par exemple avec de l'acide stéarique).

A titre d'exemples de telles craies préférentielles et disponibles commercialement, on peut citer par exemple la craie vendue sous la dénomination « Omya BLS » par la société Omya.

La composition de caoutchouc selon l'invention comprend préférentiellement de 3 à 30 pce de charge inorganique, de manière préférée de 3 à 20 pce et de manière très préférée de 3 à 15 pce, préférentiellement de 3 à 10 pce et très préférentiellement de 3 à 7 pce.

De manière préférée, le total de charge organique et inorganique dans la composition selon l'invention est au plus de 110 pce, préférentiellement au plus de 80 pce et de manière préférée au plus de 75 pce.

### Système de réticulation

La composition de caoutchouc selon l'invention comprend un système de vulcanisation comprenant du soufre et un accélérateur de vulcanisation dans lequel le ratio massique soufre sur accélérateur de vulcanisation est strictement inférieur à 1.

Le système de réticulation étant à base de soufre, on parle d'un système de vulcanisation. Le soufre peut être apporté sous toute forme, notamment sous forme de soufre moléculaire, ou d'un agent donneur de soufre. Au moins un accélérateur de vulcanisation est également présent, et, de manière optionnelle, on peut également utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 1 et 10 pce, de préférence entre 3 et 7 pce. L'accélérateur de vulcanisation est utilisé à un taux préférentiel compris dans un domaine allant de 3 à 12 pce, de préférence allant de 3,1 à 10 pce.

De manière préférée, le ratio massique soufre sur accélérateur de vulcanisation dans le système de vulcanisation est inférieur ou égal à 0,95, de préférence inférieur ou égal à 0,90, plus préférentiellement inférieur ou égal à 0,85 et de manière préférée inférieur ou égal à 0,80.

L'utilisation d'un système de vulcanisation dans lequel le ratio soufre sur accélérateur de vulcanisation est strictement inférieur à 1, en association avec la teneur spécifique relativement élevée de charge organique au regard de l'art antérieur et d'un coupage d'élastomères permet d'obtenir une composition présentant, à l'état réticulé, une rigidité améliorée tant en statique qu'en dynamique, tout en maintenant des pertes hystérétiques acceptables.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### Additifs divers

La composition de caoutchouc selon l'invention peut également comprendre tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes telles que des bismaleimides, des accepteurs (par exemple résine phénolique novolaque) ou des donneurs de méthylène (par exemple HMT ou H3M).

De manière préférée, la composition de caoutchouc selon l'invention ne comprend pas de résine renforçante ou en comprend moins de 10 pce, de préférence moins de 5 pce, de manière préférée moins de 2 pce, préférentiellement moins de 1 pce et de manière très préférée moins de 0,2 pce.

Par résine renforçante, on entend une résine connue de l'homme du métier pour rigidifier des compositions de caoutchouc. Ainsi, une composition de caoutchouc dans laquelle une résine renforçante a été ajoutée présentera une rigidité, notamment un Module de Young (mesuré conformément à la norme ASTM 412-98a) ou un complexe de cisaillement dynamique G* (mesuré conformément à la norme ASTM D 5992-96), plus élevée que cette composition sans résine renforçante. De telles résines sont par exemple les résines phénoliques, les résines époxydes, les résines benzoxazines, les résines polyuréthanes, les résines aminoplastes, etc.

### Fabrication des compositions

La composition de caoutchouc selon l'invention est fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges, les éventuels autres additifs divers, à l'exception du système de réticulation. L'incorporation de la charge à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation.

La phase non-productive est réalisée à haute température, jusqu'à une température maximale comprise entre 130°C et 170°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 110°C, par exemple entre 40°C et 100°C. On incorpore alors le système de réticulation, et le tout est alors mélangé pendant quelques minutes, par exemple entre 1 et 30 min.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme couche interne dans un pneumatique.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, de préférence sous pression, pendant un temps suffisant qui peut varier par exemple entre 5 et 90 min.

### Articles de caoutchouc finis ou semi-finis

La présente invention a également pour objet un article de caoutchouc fini ou semi-fini, tel que par exemple une bande transporteuse, ainsi qu'un pneumatique comportant une composition selon l'invention. Sont concernés les articles et pneumatiques tant à l'état cru (c'est à dire, avant cuisson) qu'à l'état cuit (c'est à dire, après réticulation ou vulcanisation).

### Pneumatique

L'invention concerne également un pneumatique comprenant une composition de caoutchouc selon l'invention. La présente invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd », - c'est-à-dire métro, bus, engins de transport routier (camions, tracteurs, remorques), véhicules hors-la-route tels qu'engins agricoles ou de génie civil -, et autres, et de manière préférée des pneumatiques destinés à équiper des véhicules de type « Poids-lourds ».

Le pneumatique selon l'invention comprend deux bourrelets destinés à entrer en contact avec une jante de montage, deux flancs prolongeant les bourrelets radialement vers l'extérieur et s'unissant dans un sommet comprenant une bande de roulement, au moins une armature de carcasse s'étendant depuis les bourrelets à travers les flancs jusqu'au sommet, ladite armature étant ancrée dans les deux bourrelets, une couche d'étanchéité s'étendant entre les deux bourrelets et située axialement à l'intérieur de l'armature de carcasse, chaque bourrelet comportant au moins :
- une structure annulaire de renforcement dite tringle ;
- une couche interne s'étendant radialement vers l'extérieur depuis ladite tringle et au contact de ladite armature de carcasse, dite bourrage tringle ;
- éventuellement une couche interne située axialement à l'extérieur de l'armature de carcasse et du bourrage tringle, dite bande latérale.

Par couche interne, on entend une couche qui n'est en contact ni avec l'air ambiant, ni avec le gaz de gonflage. De manière connue, il est possible de définir au sein du pneumatique trois types de zones :
- La zone radialement extérieure et en contact avec l'air ambiant, cette zone étant essentiellement constituée de la bande de roulement et du flanc externe du pneumatique.
- La zone radialement intérieure et en contact avec le gaz de gonflage, cette zone étant généralement constituée par la couche étanche aux gaz de gonflage, dite couche d'étanchéité et parfois appelée gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes de pneumatiques. Ce type de couche peut être par exemple une sous-couche de bande de roulement, une couche du sommet du pneumatique, une nappe carcasse, une couche du bourrelet, ou toute autre couche qui n'est pas en contact avec l'air ambiant ou le gaz de gonflage du pneumatique.

De manière préférée, l'invention concerne un pneumatique dans lequel la composition de caoutchouc selon l'invention est présente dans au moins une couche interne dudit pneumatique.

De manière avantageuse, ladite couche interne dudit pneumatique est choisie dans le groupe constitué par les pieds sommets, les couches de découplage, les gommes de bordure, les gommes de bourrage, la sous-couche de bande de roulement, le renfort de flanc et les combinaisons de ces couches internes. Dans la présente, on entend par « gomme de bordure », une couche positionné dans le pneumatique directement au contact de l'extrémité d'une nappe de renforcement, de l'extrémité d'un élément de renforcement ou d'une autre gomme de bordure.

L'invention concerne préférentiellement un pneumatique adapté pour un roulage à plat caractérisé en ce qu'il comprend un renfort de flanc comprenant une composition selon l'invention.

De manière préférée, chaque bourrelet du pneumatique adapté pour un roulage à plat comprend un bourrage tringle comprenant une composition selon l'invention.

De manière préférée, chaque bourrelet comprend une bande latérale comprenant une composition selon l'invention.

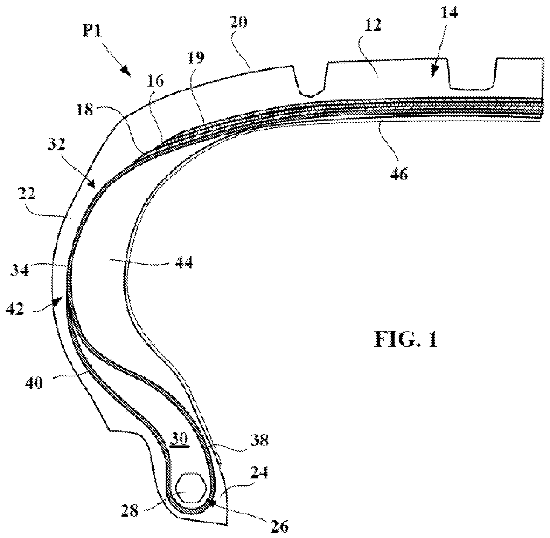

On a représenté schématiquement sur la **figure 1****,** vue en coupe radiale, un pneumatique selon un mode de réalisation de l'invention désigné par la référence générale P1. Le pneumatique P1 est du type pour roulage à plat. Le pneumatique P1 est destiné à un véhicule de tourisme.

Ce pneumatique P1 comporte un sommet 12 comprenant une armature de sommet 14, formée de deux nappes de sommet d'éléments de renfort 16, 18 et d'une nappe de frettage 19. L'armature de sommet 14 est surmontée d'une bande de roulement 20. Ici, la nappe de frettage 19 est disposée radialement extérieure aux nappes 16, 18, entre les nappes 16, 18 et la bande de roulement 20. Deux flancs autoporteurs 22 prolongent le sommet 12 radialement vers l'intérieur.

Le pneumatique P1 comporte en outre deux bourrelets 24 radialement intérieurs aux flancs 22 et comportant chacun une structure annulaire de renfort 26, en l'occurrence une tringle 28, depuis laquelle s'étend radialement vers l'extérieur une masse de gomme 30 de bourrage sur tringle, ainsi qu'une armature de carcasse radiale 32.

L'armature de carcasse 32 s'étend depuis les bourrelets 24 à travers les flancs 22 vers le sommet 12. Elle comporte au moins une nappe de carcasse 34 comprenant, comme bien connu de l'Homme du métier, des éléments de renfort parallèles les uns aux autres s'étendant dans un plan sensiblement parallèle à la direction axiale du pneumatique P1 (armature de carcasse dite « radiale »). Sur la figure 1, la nappe 34 est ancrée à chacun des bourrelets 24 par un retournement autour de la tringle 28, de manière à former dans chaque bourrelet 24 un brin aller 38 s'étendant depuis les bourrelets à travers les flancs vers le sommet, et un brin retour 40, l'extrémité radialement extérieure 42 du brin retour 40 étant sensiblement à mi-hauteur du pneumatique.

Les compositions de caoutchouc utilisées pour les nappes de sommet 16, 18 et de carcasse 34 sont des compositions conventionnelles pour calandrage d'éléments de renfort, typiquement à base de caoutchouc naturel, de noir de carbone, d'un système de vulcanisation et des additifs usuels. Lorsque les éléments de renfort sont textiles, en particulier ici dans l'armature de carcasse, l'adhésion entre l'élément de renfort textile et la composition de caoutchouc qui l'enrobe est assurée par exemple par une colle usuelle du type RFL.

Le pneumatique P1 comporte encore deux inserts de flanc 44, axialement intérieurs à l'armature de carcasse 32. Ces inserts 44 avec leur section radiale caractéristique en forme de croissant sont destinés à renforcer le flanc. Chaque insert 44 est fabriqué à partir d'une composition de caoutchouc à base d'une composition de caoutchouc réticulable selon l'invention. Chaque insert de flanc 44 est susceptible de contribuer à supporter une charge correspondant à une partie du poids du véhicule lors d'une situation de roulage à plat.

Le pneumatique comprend également une couche interne 46 d'étanchéité, de préférence en butyl, située axialement intérieure aux flancs 22 et radialement intérieure à l'armature de sommet 14 et s'étendant entre les deux bourrelets 24. Les inserts de flanc 44 sont situés axialement extérieurs à la couche interne 46. Ainsi, les inserts de flanc 44 sont disposés axialement entre l'armature de carcasse 32 et la couche interne 46.

### Exemples

### Méthodes de mesure

### Propriétés dynamiques

Les propriétés dynamiques G*(10%) et tan(d)max à 40°C sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 mm² de section), soumis à une sollicitation sinusoïdale en cisaillement simple alterné, à la fréquence de 10Hz, dans les conditions définies de température par exemple à 40°C selon la norme ASTM D 1349-99, ou selon les cas à une température différente. On effectue un balayage en amplitude de déformation de 0,1 à 50% (cycle aller), puis de 50% à 0,1% (cycle retour). Les résultats exploités sont le module complexe de cisaillement dynamique G* et le facteur de perte tan(d). Pour le cycle retour, on indique la valeur maximale de tan(d) observée, noté tan(d)max, ainsi que le module complexe de cisaillement dynamique G*(10%) à 10% de déformation, à 40°C.

On rappelle que, de manière bien connue de l'homme du métier, la valeur de tan(d)max à 40°C est représentative de l'hystérèse du matériau donc de la résistance au roulement : plus tan(d)max à 40°C est faible, plus la résistance au roulement est réduite et donc améliorée. Ainsi, une valeur plus faible que 100 indiquera une résistance au roulement réduite par rapport à la composition de référence.

### Propriétés statiques

Les essais ont été effectués conformément à la norme française NF T 46-002 de septembre 1988. Toutes les mesures de traction ont été effectuées dans les conditions normales de température (23±2°C) et d'hygrométrie (50±5% d'humidité relative), selon la norme française NF T 40-101 (décembre 1979).

On a mesuré les modules sécants nominaux calculés en se ramenant à la section initiale de l'éprouvette (ou contrainte apparente, en MPa) à 6% d'allongement, noté MA6, sur des échantillons cuits 10 minutes à 160°C.

On recherche pour ces compositions, particulièrement lorsqu'elles sont utilisées comme renfort de flanc ou dans un bourrelet, la plus grande rigidité statique possible sans pour autant dégrader la résistance au roulement. Une rigidité statique d'au moins 6 MPa est considérée comme particulièrement avantageuse pour obtenir un bon compromis rigidité/résistance au roulement.

### Préparation des compositions

On procède pour les essais qui suivent de la manière suivante : on introduit dans un mélangeur interne (taux de remplissage final : environ 70% en volume), dont la température initiale de cuve est d'environ 70 °C, successivement, l'élastomère butadiénique, la charge renforçante ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 170°C.

On récupère le mélange ainsi obtenu, on le refroidit puis on incorpore le système de vulcanisation, en mélangeant le tout (phase productive) pendant un temps approprié (par exemple entre 5 et 12 min).

Les compositions ainsi obtenues sont ensuite calandrées sous la forme de plaques (épaisseur de 2 à 3 mm) ou de feuilles fines de caoutchouc puis passent par une étape de cuisson à 160°C pendant 10 min avant la mesure de leurs propriétés physiques ou mécaniques « à cuit ».

### Exemple 1

Des essais ont été réalisés avec différentes compositions de caoutchouc présentées au tableau 1, à base d'un coupage de caoutchouc naturel et d'un élastomère constitué de polybutadiène non fonctionnel.

On mesure ensuite à cuit, donc après vulcanisation, le module de cisaillement dynamique G* et le module d'allongement MA6 exprimé en MPa.

G* est exprimé en base 100 en prenant pour référence la composition C1. Ainsi, pour le module G*, une valeur plus faible que 100 indique un module plus faible et donc une composition moins rigide.

La composition C1 correspond à la composition M2 du document FR 3 005 471. Dans la composition C2, on a ajusté la quantité de charge, du système de vulcanisation et d'additifs afin de s'approcher au mieux de la cible en terme de MA6, en conservant le même ratio Soufre/accélérateur que pour la composition de l'art antérieur C1.

**[Tableau 1]**

| | **C1** | **C2** | **C3** | **C4** |
|---|---|---|---|---|
| NR (1) | 35 | 35 | 35 | 35 |
| BR non fonctionnel (2) | 65 | 65 | 65 | 65 |
| Noir S204 (3) | 50 | 65 | 50 | 65 |
| Additifs (4) | 9 | 11 | 11 | 11 |
| Système de vulcanisation (5) | 6 | 7 | 9 | 9 |
| *Dont soufre insoluble* | 3 | 4 | 4 | 4 |
| Ratio massique S/accélérateur | 1,2 | 1,2 | 0,8 | 0,8 |

| **Propriétés à cuit - base 100 par rapport à C1** | | | | |
|---|---|---|---|---|
| MA6 - Module à 6% (23°C) (MPa) | 4,2 | 5,7 | 4,9 | 6,9 |
| G* 10% Déformation (40°C) | 100 | 139 | 113 | 152 |

| | | | | |
|---|---|---|---|---|
| Les quantités sont indiquées en pce (parties en poids pour cent parties d'élastomères). (1) Caoutchouc naturel (2) Polybutadiène « Buna CB24 » commercialisé par la société Lanxess, de plasticité Mooney 44 UM (3) Noir de carbone S204 de la société Orion Engineered Carbon, S_{BET}=19 m²/g, COAN=76 ml/100 g. (4) Les additifs comprennent de l'oxyde de zinc (grade industriel, société Umicore), de l'acide stéarique (« Pristerene 4931 » de la société Uniqema), du N-1,3-diméthylbutyl-N-phénylparaphénylènediamine (« Santoflex 6-PPD » de la société Flexsys) et du polymère 2,2,4-Trimethyl-1,2-Dihydroquinoline (TMQ) (5) Le système de vulcanisation comprend le soufre insoluble, l'accélérateur (N,N-dicyclohexylbenzothiazole-2-sulfénamide de la société Flexsys) et le retardateur (N-cyclohexylthiophtalimide commercialisé sous dénomination « Vulkalent G » par la société Lanxess) de vulcanisation | | | | |

On observe que l'association du taux de charge et du ratio soufre sur accélérateur permet d'améliorer à la fois la rigidité statique aux faibles déformations et le module de cisaillement dynamique de la composition. On note que pour la composition conforme C4 l'augmentation du module d'allongement est supérieure à celle à laquelle on aurait pu s'attendre en additionnant les effets d'une diminution du ratio soufre sur accélérateur et du taux de charge.

### Exemple 2

Des essais supplémentaires ont été réalisés avec les différentes compositions de caoutchouc présentées au tableau 2, à base d'un coupage de caoutchouc naturel et d'un élastomère constitué de polybutadiène fonctionnel.

On mesure ensuite à cuit, donc après vulcanisation, le module de cisaillement dynamique G* et la valeur de tan(d)ₘₐₓ, exprimés en base 100 en prenant pour référence la composition C5, et le module d'allongement MA6 exprimé en MPa.

**[Tableau 2]**

| | **C5** | **C6** | **C7** | **C8** | **C9** | **C10** |
|---|---|---|---|---|---|---|
| NR (1) | 35 | 35 | 65 | 35 | 35 | 35 |
| BR fonctionnel (2) | 65 | 65 | 35 | 65 | 65 | 65 |
| Noir S204 (3) | 65 | 40 | 65 | 65 | 65 | 65 |
| Additifs (4) | 11 | 11 | 11 | 11 | 11 | 11 |
| Système de vulcanisation (5) | 8 | 9 | 9 | 9 | 8 | 12 |
| *Dont soufre insoluble* | 4 | 4 | 4 | 4 | 4 | 4 |
| Ratio massique S/accélérateur | 1,21 | 0,80 | 0,80 | 0,80 | 0,95 | 0,50 |

| **Propriétés à cuit - base 100 par rapport à C1** | | | | | | |
|---|---|---|---|---|---|---|
| Module à 6% (23°C) (MPa) | 5,7 | 4,2 | 6,2 | 6,6 | 6,4 | 7,1 |
| G* 10% Déformation (40°C) | 100 | 69 | 103 | 109 | 106 | 119 |
| Tand max (40°C) | 100 | 38 | 127 | 95 | 89 | 94 |

| | | | | | | |
|---|---|---|---|---|---|---|
| Les quantités sont indiquées en pce (parties en poids pour cent parties d'élastomères). (1) Caoutchouc naturel (2) Polybutadiène fonctionnel « Nipol BR 1250H » commercialisé par la société Zeon Corporation, plasticité Mooney de 50 UM (3) Noir de carbone S204 de la société Orion Engineered Carbon, S_{BET}=19 m²/g, COAN=76 ml/100 g. (4) Les additifs comprennent de l'oxyde de zinc (grade industriel, société Umicore), de l'acide stéarique (« Pristerene 4931 » de la société Uniqema), du N-1,3-diméthylbutyl-N-phénylparaphénylènediamine (« Santoflex 6-PPD » de la société Flexsys) et du polymère 2,2,4-Trimethyl-1,2-Dihydroquinoline (TMQ) (5) Le système de vulcanisation comprend le soufre insoluble, l'accélérateur (N,N-dicyclohexylbenzothiazole-2-sulfénamide de la société Flexsys) et le retardateur (N-cyclohexylthiophtalimide commercialisé sous dénomination « Vulkalent G » par la société Lanxess) de vulcanisation | | | | | | |

On observe que l'association de la teneur en noir de carbone, en élastomère butadiènique et du ratio soufre sur accélérateur est nécessaire pour l'amélioration du compromis rigidité/hystérèse de la composition.

### Exemple 3 - Test de roulage à plat

Les pneumatiques P1 et P2 sont des pneumatiques de structure identique telle que présentée figure 1, comprenant deux inserts de flanc axialement intérieurs à l'armature de carcasse, seule différant la composition des inserts de flancs, comme indiqué dans le tableau 3. Le pneumatique P3 comprend en outre une bande latérale, les inserts de flancs, ainsi que les bourrages tringles et les bandes latérales de chaque bourrelet étant constituées d'une composition selon l'invention identique à celle utilisée pour les inserts de flancs. Pour le pneumatique P1, on utilise la composition pour insert de flanc correspondant à la composition M2 du document FR 3 005 471 (composition C1).

Le test de roulage à plat est effectué conformément au règlement 30 UNECE (référence E/ECE/324/Rev.1/Add.29/Rev.3). La valeur 0 indique que le pneumatique testé a échoué au test de roulage à plat. La valeur 1 indique que le pneumatique testé a passé avec succès le test de roulage à plat.

La masse des deux inserts de flanc axialement intérieurs à l'armature de carcasse du pneumatique est exprimée en base 100 en référence à la masse des deux inserts de flanc axialement intérieurs à l'armature de carcasse P1, une valeur supérieure à 100 témoignant d'une masse plus élevée.

La résistance au roulement est mesurée conformément au règlement 117 UNECE (référence E/ECE/324/Rev.2/Add.116/Rev.4). La mesure de la résistance au roulement se fait dans un laboratoire, à une température ambiante de 25°C. Pour réaliser cette mesure, le laboratoire utilise un cylindre sur lequel on applique le pneu à tester, avec une charge et une pression données. La résistance au roulement est exprimée en base 100 en référence au pneumatique P1. Une valeur supérieure à 100 témoigne d'une résistance au roulement plus faible.

**[Tableau 3]**

| **Pneumatique** | **P1** | **P2** | **P3** |
|---|---|---|---|
| Composition des inserts de flanc | C1 | C8 | C8 |
| Test de roulage à plat | 1 | 1 | 1 |
| Masse des inserts de flanc | 100 | 80 | 80 |
| Résistance au roulement | 100 | 103 | 105 |

Les résultats du tableau 3 indiquent que tous les pneumatiques testés assurent la performance RME requise (valeur 1 pour le test de roulage à plat). On note que les pneumatiques conformes à l'invention présentent une masse et une résistance au roulement améliorées.

## Revendications

1. Composition de caoutchouc à base :
- d'une matrice élastomérique comprenant de 40 à 80 pce d'au moins un élastomère butadiénique ;
- d'un système de vulcanisation comprenant du soufre et un accélérateur de vulcanisation, dans lequel le ratio massique soufre sur accélérateur de vulcanisation est strictement inférieur à 1 ;
- au moins 55 pce de charge organique comprenant majoritairement un noir de carbone, dit noir G, présentant une surface spécifique BET mesurée selon la norme D6556-10 allant de 15 à 50 m²/g et un indice d'absorption d'huile d'échantillons comprimés (COAN) mesuré selon la norme ASTM D3493-16 allant de 40 à 100 ml/100 g.

2. Composition selon la revendication précédente dans laquelle l'élastomère butadiénique est choisi dans le groupe constitué par les polybutadiènes, les copolymères de butadiène et leurs mélanges.

3. Composition selon l'une quelconque des revendications précédentes dans laquelle l'élastomère butadiènique présente une plasticité Mooney comprise entre 40 et 75 UM et une température de transition vitreuse comprise entre -108 et -80°C. C; la plasticité Mooney et la température de transition vitreuse étant mesurées selon les méthodes définies dans la description.

4. Composition selon l'une quelconque des revendications précédentes dans laquelle la matrice élastomérique comprend également un élastomère isoprénique, de préférence choisi dans le groupe constitué par les polyisoprènes de synthèse, le caoutchouc naturel, les copolymères d'isoprène et les mélanges de ces élastomères.

5. Composition selon l'une quelconque des revendications précédentes dans laquelle l'élastomère butadiénique est fonctionnalisé.

6. Composition selon la revendication précédente dans laquelle l'élastomère butadiénique fonctionnalisé comprend un groupe fonctionnel comprenant une fonction choisie dans le groupe constitué par les fonctions alcoxysilane, silanol, amine, acide carboxylique, polyéther et leurs combinaisons, préférentiellement constitué par les fonctions alcoxysilane, silanol, amine et leurs combinaisons.

7. Composition selon la revendication précédente dans laquelle l'élastomère butadiénique fonctionnalisé comprend un groupe fonctionnel comprenant au moins une fonction amine.

8. Composition selon l'une quelconque des revendications précédentes comprenant de 20 à 60 pce d'élastomère isoprénique.

9. Composition selon l'une quelconque des revendications précédentes comprenant de 55 à 80 pce, de manière préférée de 55 à 75 pce de noir de carbone G.

10. Composition selon l'une quelconque des revendications précédentes comprenant en outre une charge inorganique choisie dans le groupe constitué par la silice, l'alumine, la craie, l'argile, la bentonite, le talc, le kaolin, les microbilles de verre, les paillettes de verre, et leurs mélanges, de préférence constitué par la silice, la craie, l'argile, la bentonite, le talc, le kaolin, et leurs mélanges.

11. Composition selon la revendication précédente comprenant de 3 à 30 pce, de manière préférée de 3 à 20 pce et de manière très préférée de 3 à 15 pce de charge inorganique.

12. Composition selon l'une quelconque des revendications précédentes dans laquelle le ratio massique soufre sur accélérateur de vulcanisation dans le système de vulcanisation est inférieur ou égal à 0,95, de préférence inférieur ou égal à 0,90, plus préférentiellement inférieur ou égal à 0,85 et de manière préférée inférieur ou égal à 0,80.

13. Article de caoutchouc fini ou semi-fini comportant une composition selon l'une quelconque des revendications 1 à 12.

14. Pneumatique comprenant une composition selon l'une quelconque des revendications 1 à 12.

15. Pneumatique adapté pour un roulage à plat **caractérisé en ce qu'**il comprend un renfort de flanc comprenant une composition selon l'une quelconque des revendications 1 à 12.

## Patentansprüche

1. Kautschukzusammensetzung auf Basis von:
- einer elastomeren Matrix, die 40 bis 80 phe mindestens eines Butadien-Elastomers umfasst;
- einem Vulkanisationssystem, das Schwefel und einen Vulkanisationsbeschleuniger umfasst, wobei das Massenverhältnis von Schwefel zu Vulkanisationsbeschleuniger streng kleiner als 1 ist;
- mindestens 55 phe organischem Füllstoff, der hauptsächlich einen als Ruß G bezeichneten Ruß mit einer gemäß der Norm D6556-10 gemessenen spezifischen BET-Oberfläche von 15 bis 50 m²/g und einer gemäß der Norm ASTM D3493-16 gemessenen COAN (Ölabsorptionszahl einer komprimierten Probe) im Bereich von 40 bis 100 ml/100 g umfasst.

2. Zusammensetzung nach dem vorhergehenden Anspruch, wobei das Butadien-Elastomer aus der Gruppe bestehend aus Polybutadienen, Butadien-Copolymeren und Mischungen davon ausgewählt ist.

3. Zusammensetzung nach einem der vorhergehenden Ansprüche, wobei das Butadien-Elastomer eine Mooney-Plastizität zwischen 40 und 75 MU und eine Glasübergangstemperatur zwischen -108 und -80 °C aufweist; wobei die Mooney-Plastizität und die Glasübergangstemperatur gemäß den in der Beschreibung definierten Methoden gemessen werden.

4. Zusammensetzung nach einem der vorhergehenden Ansprüche, wobei die elastomere Matrix außerdem ein Isopren-Elastomer umfasst, das vorzugsweise aus der Gruppe bestehend aus synthetischen Polyisoprenen, Naturkautschuk, Isopren-Copolymeren und Mischungen dieser Elastomere ausgewählt ist.

5. Zusammensetzung nach einem der vorhergehenden Ansprüche, wobei das Butadien-Elastomer funktionalisiert ist.

6. Zusammensetzung nach dem vorhergehenden Anspruch, wobei das funktionalisierte Butadien-Elastomer eine funktionelle Gruppe mit einer Funktion aus der Gruppe bestehend aus Alkoxysilan-, Silanol-, Amin-, Carbonsäure- und Polyether-Funktionen und Kombinationen davon, vorzugsweise bestehend aus Alkoxysilan-, Silanol-und Amin-Funktionen und Kombinationen davon, umfasst.

7. Zusammensetzung nach dem vorhergehenden Anspruch, wobei das funktionalisierte Butadien-Elastomer eine funktionelle Gruppe mit mindestens einer Amin-Funktion umfasst.

8. Zusammensetzung nach einem der vorhergehenden Ansprüche, umfassend 20 bis 60 phe Isopren-Elastomer.

9. Zusammensetzung nach einem der vorhergehenden Ansprüche, umfassend 55 bis 80 phe, vorzugsweise 55 bis 75 phe, Ruß G.

10. Zusammensetzung nach einem der vorhergehenden Ansprüche, die außerdem einen anorganischen Füllstoff umfasst, der aus der Gruppe bestehend aus Kieselsäure, Aluminiumoxid, Kreide, Ton, Bentonit, Talk, Kaolin, Glasmikrokugeln, Glasplättchen und Mischungen davon, vorzugsweise bestehend aus Kieselsäure, Kreide, Ton, Bentonit, Talk, Kaolin und Mischungen davon, ausgewählt ist.

11. Zusammensetzung nach dem vorhergehenden Anspruch, umfassend 3 bis 30 phe, vorzugsweise 3 bis 20 phe und besonders bevorzugt 3 bis 15 phe anorganischen Füllstoff.

12. Zusammensetzung nach einem der vorhergehenden Ansprüche, wobei das Massenverhältnis von Schwefel zu Vulkanisationsbeschleuniger in dem Vulkanisationssystem kleiner oder gleich 0,95, bevorzugt kleiner oder gleich 0,90, weiter bevorzugt kleiner oder gleich 0,85 und vorzugsweise kleiner oder gleich 0,80 ist.

13. Kautschukerzeugnis oder -halbzeug, umfassend eine Zusammensetzung nach einem der Ansprüche 1 bis 12.

14. Reifen, umfassend eine Zusammensetzung nach einem der Ansprüche 1 bis 12.

15. Notlaufreifen, **dadurch gekennzeichnet, dass** er eine Seitenwandverstärkung umfasst, die eine Zusammensetzung nach einem der Ansprüche 1 bis 12 umfasst.

## Claims

1. Rubber composition based on:
- an elastomeric matrix comprising from 40 to 80 phr of at least one butadiene elastomer;
- a vulcanization system comprising sulfur and a vulcanization accelerator, in which the weight ratio of sulfur to vulcanization accelerator is strictly less than 1;
- at least 55 phr of organic filler mainly comprising a carbon black, called black G, having a BET specific surface area ranging from 15 to 50 m²/g and a compressed oil absorption number (COAN) measured according to ASTM Standard D3493-16 ranging from 40 to 100 ml/100 g.

2. Composition according to the preceding claim, in which the butadiene elastomer is selected from the group consisting of polybutadienes, butadiene copolymers and mixtures thereof.

3. Composition according to either one of the preceding claims, in which the butadiene elastomer has a Mooney plasticity of between 40 and 75 MU and a glass transition temperature of between -108 and -80°C; the Mooney plasticity and the glass transition temperature being measured according to methods defined in the description.

4. Composition according to either one of the preceding claims, in which the elastomeric matrix also comprises an isoprene elastomer, preferably selected from the group consisting of synthetic polyisoprenes, natural rubber, isoprene copolymers and mixtures of these elastomers.

5. Composition according to any one of the preceding claims, in which the butadiene elastomer is functionalized.

6. Composition according to the preceding claim, in which the functionalized butadiene elastomer comprises a functional group comprising a function selected from the group consisting of alkoxysilane, silanol, amine, carboxylic acid and polyether functions, and combinations thereof, preferably consisting of alkoxysilane, silanol and amine functions, and combinations thereof.

7. Composition according to the preceding claim, in which the functionalized butadiene elastomer comprises a functional group comprising at least one amine function.

8. Composition according to any one of the preceding claims, comprising from 20 to 60 phr of isoprene elastomer.

9. Composition according to any one of the preceding claims, comprising from 55 to 80 phr, preferably from 55 to 75 phr, of carbon black G.

10. Composition according to any one of the preceding claims, also comprising an inorganic filler selected from the group consisting of silica, alumina, chalk, clay, bentonite, talc, kaolin, glass microbeads, glass flakes, and mixtures thereof, preferably consisting of silica, chalk, clay, bentonite, talc, kaolin, and mixtures thereof.

11. Composition according to the preceding claim, comprising from 3 to 30 phr, preferably from 3 to 20 phr and very preferably from 3 to 15 phr of inorganic filler.

12. Composition according to any one of the preceding claims, in which the weight ratio of sulfur to vulcanization accelerator in the vulcanization system is less than or equal to 0.95, preferably less than or equal to 0.90, more preferentially less than or equal to 0.85 and preferably less than or equal to 0.80.

13. Finished or semi-finished rubber article comprising a composition according to any one of Claims 1 to 12.

14. Tyre comprising a composition according to any one of Claims 1 to 12.

15. Run-flat tyre, **characterized in that** it comprises a sidewall reinforcer comprising a composition according to any one of Claims 1 to 12.
